# EUROPEAN PATENT APPLICATION

(11) **EP 2 727 725 A1**
(43) Date of publication of application: **07.05.2014**
(21) Application number: 12306364.6
(22) Date of filing: 31.10.2012
(51) Int. Cl.: B32B 27/36, C08J 7/04, C09D 127/06, E04F 15/02, B32B 37/04

(54) **Low cost synthetic floor covering**

(71) Applicant: Tarkett GDL S.A., 9779 Lentzweiler (LU)
(72) Inventor: Georges, Jean-Philippe, 9559 WILTZ (LU); Forget, Luc, 9559 WILTZ (LU)
(74) Representative: Blot, Philippe Robert Emile

(57) **Abstract**

The invention concerns a synthetic flooring comprising:
- a substrate layer comprising a recycled polyvinyl chloride and a filler; and
- a surface layer comprising a printed polyethylene terephtalate film coated with a primer dispersion comprising :
- polyvinyl chloride;
- pigment; and

one or more agents chosen from pH adjusting agents, wetting agents, dispersants, defoaming agents, and viscosity agents.

The invention also concerns a process for the manufacture of synthetic flooring, comprising the steps of:
(i) providing a surface layer comprising a polyethylene terephtalate film;
(ii) printing a decorative pattern on the back side of the surface layer;
(iii) coating the printed surface layer with said primer dispersion; and
(iv) providing a substrate layer comprising recycled polyvinyl chloride and a filler; and
(v) bonding the coated surface layer to the substrate layer

The invention also concerns the use of said dispersion for the manufacture of synthetic floor coverings.

## Description

### [Technical Field]

The present invention concerns the field of synthetic floor coverings. More specifically, it refers to flooring that may be manufactured with a reduced cost.

### [Background Art]

Heterogeneous synthetic floor coverings generally comprise at least two layers such as a substrate layer and a surface layer.

An important cost factor is the material chosen for these layers. Less costly materials are available but may not show the optimum properties profile.

Recycled synthetic materials are particularly interesting as they are less costly and reduce waste volume. In particular PVC resins obtained from recycled PVC waste may be used for the manufacture of low cost synthetic flooring. The color of such recycled materials however varies with every batch. For a satisfactory decorative effect, such a substrate layer may be coated with a pigmented coating so as to harmonize the background color for the decorative surface layer above.

On the other hand, polyethylene terephtalate (PET) is a cost-effective material for surface layers with good transparency, durability and printability. PET films however show poor adhesion to PVC and thus generally require a surface treatment such as a primer coating.

The process of manufacture of synthetic flooring may also be an important cost factor, in particular the number of layers to be produced and assembled and the number of surface treatments required. Another cost factor is the speed of the manufacturing process.

The patent US 6,933,043 proposes a floor covering which comprises a substrate layer of polyvinyl chloride (PVC) and a surface layer comprising a polyethylene terephtalate (PET) film printed with a decorative pattern. In order to conceal the color of the substrate layer and to dissipate heat, the floor covering further comprises an intermediate layer of polyvinyl chloride resin and pigment having a thickness of 0,1 to 1mm. The printed PET film may be coated with a primer based on polyvinyl acetate, polyurethane acrylate or ethylene vinyl acetate in order to improve adhesion.

### [Technical Problem]

The present invention aims to provide a synthetic surface floor covering which is less costly. More specifically, it aims to provide a floor covering and a manufacturing process which uses low cost materials, in particular recycled PVC and PET, with a reduced number of manufacturing steps. Further, it aims to provide a process which may be carried out at high speed.

### [Solution to Problem]

According to the most general definition, the above technical problems may be solved according to the invention by providing a floor covering comprising a substrate layer comprising recycled PVC and a surface layer comprising polyethylene terephtalate wherein the surface layer is coated with a specific primer dispersion which improves the adhesion to the substrate layer and also serves as a printing background by homogenizing the coloration of the substrate layer.

The primer dispersion used for such floor covering comprises polyvinyl chloride, pigment, and one or more agents chosen from pH adjusting agents, wetting agents, dispersants, defoaming agents, and viscosity agents.

The double function of the primer dispersion reduces the number of manufacturing steps. Thereby, the process of manufacture is simplified and accelerated since it only comprises one coating step and does not require the assembly with an intermediate layer.

### [Summary of Invention]

According to a first aspect, the invention is directed to a synthetic flooring comprising:
- a substrate layer comprising a recycled polyvinyl chloride and a filler; and
- a surface layer comprising a printed polyethylene terephtalate film coated with a primer dispersion comprising :
   - polyvinyl chloride, preferably polyvinyl chloride resin and/or polyvinyl chloride latex;
   - pigment; and
   one or more agents chosen from pH adjusting agents, wetting agents, dispersants, defoaming agents, and viscosity agents.

Preferably, the substrate layer comprises 50 to 90 wt. % of recycled polyvinyl chloride and 10 to 50 wt.% of filler.

Advantageously, the primer dispersion comprises:
- 5 to 20 wt. % of polyvinyl chloride resin;
- 15 to 40 wt. % of polyvinyl chloride latex;
- 15 to 40 wt. % of pigment, notably titanium dioxide; and
up to 20 wt. % of one or more agents chosen from pH adjusting agents, wetting agents, dispersants, defoaming agents, and viscosity agents.

Preferably, the pigment is titanium dioxide.

Preferably, the polyethylene terephtalate film comprises a backing layer, notably made of copolyester.

According to a second aspect, the invention is directed to a process for the manufacture of synthetic flooring, comprising the steps of:
(i) providing a surface layer comprising a polyethylene terephtalate film;
(ii) printing a decorative pattern on the back side of the surface layer;
(iii) coating the printed surface layer with the primer dispersion described above; and
(iv) providing a substrate layer comprising recycled polyvinyl chloride and a filler; and
(v) bonding the coated surface layer to the substrate layer.

Preferably, the polyethylene terephtalate film provided in step (i) comprises a backing layer, notably made of copolyester.

Advantageously, the polyethylene terephtalate film provided in step (i) has a thickness of from 5 to 30 µm.

Preferably, the polyethylene terephtalate film is coated in step (iii) with 15 to 40 g/m² of primer dispersion.

Advantageously, the substrate layer provided in step (iv) comprises 50 to 90 wt. % of recycled polyvinyl chloride and 10 to 50 wt.% of filler.

Advantageously, the substrate layer provided in step (iv) has a thickness of from 0.1 to 1 mm.

According to a third aspect, the invention is directed to the use of said primer dispersion for the manufacture of synthetic floor coverings.

### [Brief Description of the Drawings]

The invention will be readily apparent by reference to the following detailed description and examples, along with the following drawings, wherein:

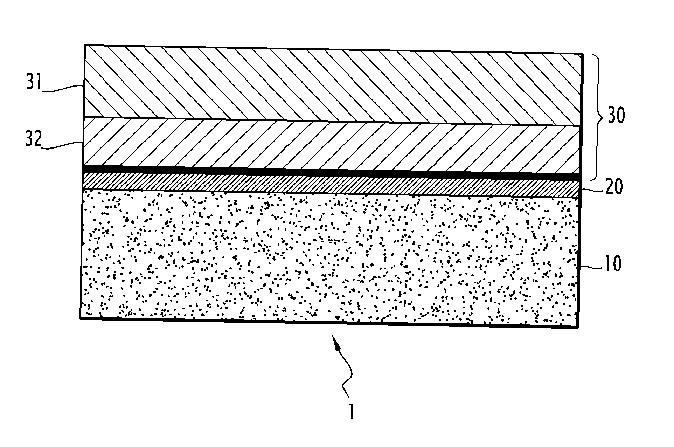

Fig. 1 shows a cross-sectional view of a decorative floor covering according to a preferred embodiment of the invention.

### [Detailed Description]

The present invention is directed to a synthetic floor covering which may be manufactured at a reduced cost.

According to a first aspect of the invention, the synthetic floor covering comprises a substrate layer, a surface layer comprising a PET film, where the back side of the surface layer is printed with a decorative pattern and coated with a primer dispersion.

While the floor covering may also comprise further other layers, such floor coverings are more expensive and thus less preferred in the framework of the present invention. Therefore, the floor covering is preferably comprised solely of the above mentioned layers.

The substrate layer comprises recycled PVC and a filler.

Recycled PVC is commercially available notably in granulated or in powder form. Both forms are convenient for the substrate layer. Preferably, the substrate layer comprises recycled PVC as sole polymer component.

As the recycled PVC already comprises additives such as plasticizers, it is generally not required to add any specific further additive. However, it may be indicated in specific cases to further add stabilizers, fillers, processing aids, to the formulation.

The substrate layer further comprises a filler. Within the present invention, the term "filler" designates an inert compound, notably mineral compound. The chemical nature and particle size of the filler is not specifically limited within the present invention. However; most often fillers are chosen among calcium carbonate, talc, wollatonite and silica.

The substrate layer preferably comprises 50 to 90, notably 65 to 85 and more specifically 70 to 80 wt. % of recycled PVC. Furthermore, the substrate layer preferably comprises 10 to 50, notably 20 to 35 and more specifically 25 to 30 wt. % of filler.

The thickness of the substrate layer may vary largely. However, so as to produce a floor covering with satisfaying properties and low manufacture cost, it is preferred that the substrate layer has thickness of 0.1 to 10, preferably between 0.2 and 1 mm.

As explained above, the surface layer comprising a PET film is printed on the back side with a decorative pattern and is coated with a primer dispersion.

The PET film may be purchased or prepared from PET pellets which are commercially available. It is generally not required to add any further additives to the PET pellets.

Preferably, the surface layer comprises further to the PET film a backing layer attached on the back of the PET film. A backing layer made of copolyester is particularly preferred. Advantageously, the PET film may be coextruded with the copolyester

The thickness of the surface layer may vary largely, but is lower than the thickness of the substrate layer. Generally, the surface layer has a thickness of 5 to 20, preferably between 7 and 15 µm.

The figure 1 illustrates a floor covering according to a preferred embodiment of the present invention.

The floor covering 1 illustrated comprises a substrate layer 10 and a surface layer 30. The substrate layer 10 comprises or is made of recycled PVC and a filler such as calcium carbonate. The surface layer 30 comprises a PET film 31 and optionally a backing layer 32 which may comprise or be made of copoyester. The back side of the surface layer 30 (in the embodiment illustrated in figure 1, the back side of the backing layer 32) is printed with a decorative pattern, indicated in figure 1 by a thick line. Thereby, the PET layer serves as a wear layer and, absent a backing layer, also as a carrier for the decorative pattern.

The surface layer 30 is on the back with a dispersion comprising a PVC, preferably a PVC resin and/or a PVC latex, and a pigment, along with optional additives, thereby forming a layer 20. The dispersion serves as a primer so as to improve the adhesion of the PET or the backing layer to the PVC based substrate layer below. The dispersion however also serves as a printing layer by homogenizing eventual color variation of the substrate layer. The decorative pattern printed on the back side of the surface layer thus appears more homogeneous when viewed from above, without requiring a specific coating step.

### [Primer dispersion]

The primer dispersion used for the manufacture of the synthetic floor covering described above comprises a polyvinyl chloride, preferably in form of a polyvinyl chloride resin and/or a polyvinyl chloride latex, a pigment and one or more agents chosen from pH adjusting agents, wetting agents, dispersants, defoaming agents, and viscosity agents is essential to the present invention.

Advantageously, the primer dispersion comprises
- 5 to 20, preferably 10 to 15 wt. % of polyvinyl chloride resin;
- 15 to 40, preferably 20 to 30 wt. % of polyvinyl chloride latex;
- 15 to 40, preferably 25 to 35 wt. % of pigment; and
up to 20, preferably 5 to 10 wt. % of one or more agents chosen from pH adjusting agents, wetting agents, dispersants, defoaming agents, and viscosity agents.

Generally, the water content of the primer dispersion, exclusing the water from any PVC latex, is comprised between 10 and 40, preferably between 20 and 30 wt. %. Preferably, the primer dispersion contains mainly or exclusively water as a liquid carrier and solvent.

The polyvinyl chloride resin in the primer dispersion may be in form of pellets, powder or paste. Paste PVC is preferred.

The polyvinyl chloride latex may be in particular an emulsion containing vinyl chloride copolymer emulsified in water. Such PVC latex most often contains additives to stabilize the latex, such as emulsifiers and thickeners. The total solid content of such latex may be comprised between 30 to 80 wt. %, preferably 40 to 65 wt. %.

The pigment in the primer dispersion is preferably a white mineral pigment such titanium dioxide. Preferred pigments have an average particle size of 0.01 to 10, preferably between 1.1 and 1 µm.

Most preferred within the present invention is a primer dispersion comprising:
- 10 to 15 wt. % of polyvinyl chloride resin;
- 20 to 30 wt. % of polyvinyl chloride latex;
- 25 to 35 wt. % of pigment;
- 5 to 10 wt. % of an acrylic polymer ; and
- 20 to 25 wt. % of water.

### [Process of manufacture]

According to a second aspect, the invention is directed to a process for the manufacture of synthetic flooring, comprising the steps of:
(i) providing a surface layer comprising a polyethylene terephtalate film;
(ii) printing a decorative pattern on the back of the surface layer;
(iii) coating the printed surface layer with the primer dispersion described above; and
(iv) providing a substrate layer comprising recycled polyvinyl chloride and a filler; and
(v) bonding the coated surface layer to the substrate layer.

Step (i) of the above process may be carried out using a commercially available or manufactured PET film. In the alternative, the PET film may comprise a backing layer, notably made of copolyester. Such a PET film with a backing layer may be produced for instance by coextrusion.

The manufacture of such films is well-known in the art.

Advantageously, the polyethylene terephtalate film provided in step (i) has a thickness of from 5 to 30, in particular 10 to 15 µm.

Step (ii) of the process according to the invention may be carried out by any conventional process known in the art, such a gravure printing. The decorative pattern is generally printed onto the back surface of the PET film or onto the backing layer. Thereby, the PET film serves as a carrier for the decorative pattern and, absent a backing layer, also as a wear layer.

Step (iii) of the process above can be realized by conventional coating processes Depending notably on the pigment charge, the dispersion quantity can vary. Most often, applying the dispersion at 15 to 40, preferably 20 to 30 g/m² is sufficient to observe the required effect.

Advantageously, the substrate layer provided in step (iv) comprises 50 to 90 wt. % of recycled polyvinyl chloride and 10 to 50 wt. % of filler. Preferably, the substrate layer provided in step (iv) comprises a non foamed polyvinyl chloride. Advantageously, the substrate layer provided in step (iv) has a thickness of from 0.1 to 1 mm.

The manufacture of such substrate layers is well-known in the art.

Step (v) may be carried out by any process known in the art, notably by applying pressure and pressing in a press and preheating to a temperature of 140°C to 170°C.

### [Use]

According to a third aspect, the invention is directed to the use of said primer dispersion for the manufacture of synthetic floor coverings.

Indeed, the use of this dispersion allows for the manufacture of a low cost floor covering which comprises a minimal number of layers, and which may be manufactured using low cost materials, with a minimum number of manufacturing steps and with high speed processing.

### [Examples]

### Preparation of primer dispersion A

In suitable container equipped with an appropriate mixer, the components indicated in the table 1 below were introduced and thoroughly mixed at room temperature.

The stable white dispersion A obtained is ready for use.

### Preparation of primer dispersion B

In suitable container equipped with an appropriate mixer, the components indicated in the table 1 below were introduced and thoroughly mixed at room temperature.

The stable white dispersion B obtained is ready for use.

**Table 1: Composition of primer dispersion**

| **Component** | | **Dispersion A** | **Dispersion B** |
|---|---|---|---|
| **Product** | **Function** | [wt. %] | [wt. %] |
| Environ® 839 | Acrylic polymer | 6,319 | 6,327 |
| | Water | 5,495 | 5,502 |
| AMP90 | neutralisation agent | 0,189 | 0,189 |
| TBEP from Clarian | Wetting agent | 1,904 | 1,907 |
| Tego Dispers 650 | Dispersant | 0,014 | 0,014 |
| Foamaster 50 0,4% | Defoaming agent | 0,626 | 0 |
| Tego foamex 842 | Defoaming agent | 0 | 0,499 |
| Vycar 351 | PVC emulsion | 26,425 | 26,459 |
| Pevikon DP1510 | PVC resin | 10,649 | 10,663 |
| Water | | 18,805 | 18,829 |
| Nopco DSX 1514 | Viscosity agent | 0,395 | 0,395 |
| Tronox CR-813 | Pigment | 29,178 | 29,215 |
| Total | | 100 | 100 |

### EXAMPLE 1

### Preparation of synthetic floor covering

A decorative synthetic floor covering is manufactured as follows.

A substrate layer sheet based on recycled PVC is prepared by kneading in a rolling mill 76 weight parts of recycled PVC and 24 weight parts of calcium carbonate at 160°C to 190°C, and rolling to a thickness of 0.5 mm.

A surface layer sheet is prepared by printing a decorative pattern on the back of a PET film provided with a copolyester backing (Lumiror 10.91 from Torray) having a total thickness of 12 µm using a gravure printing method. Subsequently, the back side of the printed PET film is coated with 25 g/m² of dispersion A and dried in an oven.

The floor covering is manufactured by assembly of the surface layer sheet on top of the substrate layer sheet by applying pressure and pressing in a press and preheating to a temperature of 140 °C to 170 °C.

### EXAMPLE 2

### Preparation of synthetic floor covering

A substrate layer sheet based on recycled PVC is prepared by kneading in a rolling mill 76 weight parts of recycled PVC and 24 weight parts of calcium carbonate at 160°C to 190°C, and rolling to a thickness of 0,5 mm.

A surface layer sheet is prepared by printing a decorative pattern on the back of a PET film provided with a copolyester backing (Lumiror 10.91 from Torray) having a total thickness of 12 µm using a gravure printing method. Subsequently, the back side of the printed PET film is coated with 25 g/m² of dispersion B and dried in an oven.

The floor covering is manufactured by assembly of the surface layer sheet on top of the substrate layer sheet by applying pressure and pressing in a press and preheating to a temperature of 140 °C to 170 °C.

The synthetic floor coverings prepared in example 1 and 2 showed very satisfactory properties in terms of cohesion of the layers: the compliance of the floor covering with NF EN 431 has been verified and shows a resistance of 50N/50mm.

Accordingly, the synthetic floor covering is manufactured using a single coating step for applying a dispersion having a double function: improving the adhesion of the PET and providing a homogeneous background for the decorative pattern printed onto the PET despite varying colours of the substrate layer. The present invention thus provides for a low cost synthetic floor covering which may be manufactured using a simple and high speed process.

## Claims

1. A synthetic flooring comprising:
- a substrate layer comprising a recycled polyvinyl chloride and a filler; and
- a surface layer comprising a polyethylene terephtalate film printed on the back side and coated with a primer dispersion comprising:
- polyvinyl chloride;
- pigment; and
one or more agents chosen from pH adjusting agents, wetting agents, dispersants, defoaming agents, and viscosity agents.

2. The synthetic flooring according to claim 1, wherein the polyvinyl chloride is chosen from :
- polyvinyl chloride resin;
- polyvinyl chloride latex;
- a mixture of polyvinyl chloride resin and - polyvinyl chloride latex.

3. The synthetic flooring according to claim 1 or 2, wherein the substrate layer comprises 50 to 90 wt. % of recycled polyvinyl chloride and 10 to 50 wt.% of filler.

4. The synthetic flooring according to any of claims 1 to 3, wherein the primer dispersion comprises:
- 5 to 20 wt. % of polyvinyl chloride resin;
- 15 to 40 wt. % of polyvinyl chloride latex;
- 15 to 40 wt. % of pigment; and
up to 20 wt. % of one or more agents chosen from pH adjusting agents, wetting agents, dispersants, defoaming agents, and viscosity agents.

5. The synthetic flooring according to any of claims 1 to 4, wherein the polyethylene terephtalate film comprises a backing layer.

6. The synthetic flooring according to any of claims 1 to 5, wherein the backing layer of the polyethylene terephtalate film is made of copolyester.

7. A process for the manufacture of synthetic flooring, comprising the steps of:
(i) providing a surface layer comprising a polyethylene terephtalate film;
(ii) printing a decorative pattern on the back side of the surface layer;
(iii) coating the printed surface layer with a primer dispersion comprising:
- polyvinyl chloride;
- pigment; and
one or more agents chosen from pH adjusting agents, wetting agents, dispersants, defoaming agents, and viscosity agents; and
(iv) providing a substrate layer comprising recycled polyvinyl chloride and a filler; and
(v) bonding the coated surface layer to the substrate layer.

8. The process according to claim 7, wherein the polyethylene terephtalate film provided in step (i) comprises a backing layer.

9. The process according to claim 7 or 8, wherein the polyethylene terephtalate film provided in step (i) has a thickness of from 5 to 30 µm.

10. The process according to any of claims 7 to 9, wherein the primer dispersion comprises :
- 5 to 20 wt. % of polyvinyl chloride resin;
- 15 to 40 wt. % of polyvinyl chloride latex;
- 15 to 40 wt. % of pigment; and
up to 20 wt. % of one or more agents chosen from pH adjusting agents, wetting agents, dispersants, defoaming agents, and viscosity agents.

11. The process according to any of claim 7 to 10, wherein in the primer dispersion in step (iii), the pigment is titanium dioxide.

12. The process according to any of claims 7 to 11, wherein the polyethylene terephtalate film is coated in step (iii) with 15 to 40 g/m² of primer dispersion.

13. The process according to any of claims 7 to 12, wherein the substrate layer provided in step (iv) comprises 50 to 90 wt. % of recycled polyvinyl chloride and 10 to 50 wt.% of filler.

14. The process according to any of claims 7 to 13, wherein the substrate layer provided in step (iv) has a thickness of from 0,1 to 1 mm.

15. Use of a primer dispersion comprising:
- 5 to 20 wt. % of polyvinyl chloride resin;
- 15 to 40 wt. % of polyvinyl chloride latex;
- 15 to 40 wt. % of pigment; and
up to 20 wt. % of one or more agents chosen from pH adjusting agents, wetting agents, dispersants, defoaming agents, and viscosity agents,
for the manufacture of synthetic floor coverings.
